# EUROPEAN PATENT APPLICATION

(11) **EP 4 693 702 A1**
(43) Date of publication of application: **11.02.2026**
(21) Application number: 24887345.7
(22) Date of filing: 21.05.2024
(51) Int. Cl.: H01M 50/536, H01M 50/528, H01M 50/567, H01M 50/553

(54) **BATTERY CELL AND PREPARATION METHOD THEREFOR, BATTERY AND ELECTRIC DEVICE**

(30) Priority: 08.11.2023 CN 202311482119
(71) Applicant: Contemporary Amperex Technology Co., Limited, Ningde, Fujian 352100 (CN)
(72) Inventor: WU, Kai, Ningde, Fujian 352100 (CN); LIN, Wenfa, Ningde, Fujian 352100 (CN); YE, Zetao, Ningde, Fujian 352100 (CN); CHEN, Congsheng, Ningde, Fujian 352100 (CN); LUO, Huaen, Ningde, Fujian 352100 (CN)
(74) Representative: Ran, Handong
(86) International application number: PCT/CN2024/094502
(87) International publication number: WO 2025/097721

(57) **Abstract**

A battery cell and a preparation method therefor, a battery and an electric device. The battery cell comprises a casing, an electrode assembly and a protection member; the casing is provided with a pole, the pole has a first side and a second side which are oppositely arranged in the height direction of the pole, the first side is arranged towards the interior of the casing, and the pole is provided with a through hole passing through the first side and the second side; the electrode assembly is arranged in the casing and comprises an active material coating part and a conductive part, and at least a part of the conductive part passes through the through hole from the first side to the second side; the protective member is at least partially arranged on the side of the conductive part away from the electrode assembly and covers the through hole. In the technical solution of the embodiments of the present application, a protection member is provided, at least part of the protection member is arranged on the side of the conductive part away from the electrode assembly, and the protection member covers the through hole on the pole, thus improving the performance and reliability of the battery cell.

## Description

### CROSS-REFERENCE TO RELATED APPLICATIONS

The present application claims priority to Chinese Patent Application No. 202311482119.2, filed on November 8, 2023, which is incorporated herein by reference in its entirety.

### TECHNICAL FIELD

The present application relates to the field of batteries, and specifically, to a battery cell and a preparation method thereof, a battery, and an electric device.

### BACKGROUND

Energy saving and emission reduction are keys to sustainable development of the automobile industry, and electric vehicles become an important part of the sustainable development of the automobile industry due to advantages of energy saving and environmental protection of the electric vehicles. For the electric vehicles, battery technologies are an important factor related to development of the electric vehicles.

In the related technology, when a conductive portion of a battery cell is connected to a terminal post, a foreign matter enters the battery cell, resulting in deterioration in reliability of the battery cell.

### SUMMARY

In view of the foregoing problem, the present application provides a battery cell, a battery, and an electric device, so that a probability that a foreign matter enters a battery cell can be reduced, thereby improving reliability of the battery cell.

According to a first aspect, the present application provides a battery cell, including: a housing on which a terminal post is disposed, where the terminal post has a first side and a second side that are opposite in a height direction of the terminal post, the first side faces the interior of the housing, and a penetration hole penetrating through the first side and the second side is provided on the terminal post; an electrode assembly, disposed inside the housing, and including an active-material coating portion and a conductive portion connected to the active-material coating portion, where at least a part of the conductive portion penetrates from the first side to the second side through the penetration hole; and a protective member, where at least a part of the protective member is disposed on a side that is of the conductive portion and that is away from the electrode assembly, and covers the penetration hole.

In this technical solution of this embodiment of the present application, the protective member is disposed, at least a part of the protective member is disposed on the side that is of the conductive portion and that is away from the electrode assembly, and the penetration hole on the terminal post is covered by using the protective member. Therefore, on one hand, a probability that a foreign matter enters the housing of the battery cell through the penetration hole can be reduced, a probability of a short circuit inside a battery is reduced, and problems such as fire and explosion occurring in the battery are reduced, thereby facilitating improving performance and reliability of the battery cell. On the other hand, at least a part of the conductive portion can be protected, and connection stability between the conductive portion and the terminal post is improved when a position limiting function is achieved, thereby further improving the reliability of the battery cell.

In some embodiments, the conductive portion is connected to the terminal post through welding to form a first welding mark. The first welding mark and the penetration hole are arranged in a staggered manner. In the foregoing technical solution, the first welding mark and the penetration hole are arranged in the staggered manner, to be specific, a position at which the conductive portion is welded to the terminal post avoids the penetration hole. Therefore, on one hand, in a process in which the conductive portion is welded to the terminal post, welding slag entering the housing of the battery cell through the penetration hole can be reduced, thereby reducing a risk of a short circuit. On the other hand, a welding area between the conductive portion and the terminal post can be increased, to improve connection stability after the conductive portion is welded to the terminal post, thereby facilitating improving the reliability of the battery cell.

In some embodiments, the protective member is connected to the conductive portion and the terminal post through welding. The first welding mark sequentially extends from the protective member into the conductive portion and the terminal post. In the foregoing technical solution, the protective member is connected to the conductive portion and the terminal post through welding. Therefore, on one hand, quality and stability of the welding between the conductive portion and the terminal post can be improved. On the other hand, the protective member replaces a welding press nozzle in the related technology, and the conductive portion can be firmly pressed onto the terminal post by using the protective member, thereby reducing a defect of the welding between the conductive portion and the terminal post, and improving connection reliability between the conductive portion and the terminal post. Because the welding press nozzle is omitted, costs are reduced.

In some embodiments, the first welding mark includes one welded seam. Alternatively, the first welding mark includes a first welded seam, a second welded seam, and a third welded seam. The second welded seam and the third welded seam are located on two opposite sides of the first welded seam in a width direction of the first welded seam. The second welded seam and the third welded seam are added to the two sides of the first welded seam, so that a welding area can be increased, thereby further improving the stability of the welding between the conductive portion and the terminal post, and enhancing an overcurrent capability.

In some embodiments, the protective member is fixedly connected to the conductive portion or the terminal post. Through this setting, on one hand, the protective member can be fixedly mounted, to reduce sway of the protective member and improve mounting stability of the protective member, so that the protective member can well implement a protection function and a dustproof function, thereby further improving the stability of the welding between the conductive portion and the terminal post. On the other hand, the protective member is pressed onto the conductive portion, and replaces the press nozzle in a welding process in the related technology, so that sizes of the terminal post and the conductive portion can be properly reduced, thereby reducing costs.

In some embodiments, the protective member is connected to the conductive portion or the terminal post through welding to form a second welding mark. In the foregoing technical solution, the protective member is connected to the conductive portion and the terminal post through welding. Therefore, on one hand, the protective member can be fixedly mounted, so that the protective member can well implement a protection function, a dustproof function, and a position limiting function, thereby further improving the stability of the welding between the conductive portion and the terminal post. On the other hand, the overcurrent capability can be enhanced.

In some embodiments, the protective member has an avoidance hole, the avoidance hole and the penetration hole are arranged in a staggered manner, and the first welding mark is disposed at the avoidance hole, penetrates through the conductive portion, and extends into the terminal post. In the foregoing technical solution, the avoidance hole is provided on the protective member. Therefore, on one hand, the conductive portion and the terminal post can be conveniently welded together. On the other hand, welding power can be reduced, thereby reducing heat input, further inhibiting formation of a crack, and improving the quality and stability of the welding between the conductive portion and the terminal post.

In some embodiments, the avoidance hole is a through avoidance hole. The first welding mark extends into the through avoidance hole and is connected to a hole wall of the through avoidance hole. In the foregoing technical solution, the through avoidance hole is set as the avoidance hole, so that a welding head can extend into the avoidance hole in the process in which the conductive portion is welded to the terminal post, to more directly act on the conductive portion. Therefore, the conductive portion and the terminal post are conveniently welded together. In addition, in the welding process, at least a part of a peripheral wall of the through avoidance hole can also be fused, to fill a welding pool between the conductive portion and the terminal post, and compensate for a contraction amount after the welding pool is solidified, so that a crack defect can be reduced, and the quality and stability of the welding between the conductive portion and the terminal post are improved. In addition, the welding power can be reduced, thereby reducing the heat input, and further inhibiting formation of a crack.

In some embodiments, the avoidance hole is a blind avoidance hole. The first welding mark is disposed at the blind avoidance hole, sequentially penetrates through a bottom wall of the blind avoidance hole and the conductive portion, and extends into the terminal post. In the process in which the conductive portion is welded to the terminal post, the welding head may extend into the blind avoidance hole, and directly act on the bottom wall of the blind avoidance hole. After the bottom wall of the blind avoidance hole is fused, the welding pool between the conductive portion and the terminal post can be filled, and the contraction amount after the welding pool is solidified is compensated for, so that the crack defect can be reduced, and the quality and stability of the welding between the conductive portion and the terminal post are improved. In addition, because a thickness of the bottom wall of the blind avoidance hole is small, and the bottom wall is easily fused, the welding power can be reduced, thereby reducing the heat input, and further inhibiting formation of a crack.

In some embodiments, a width of the avoidance hole ranges from 0.2 mm to 1.2 mm. The width of the avoidance hole is limited within the foregoing range. Therefore, on one hand, the protective member can perform effective avoidance, thereby improving welding efficiency. On the other hand, the welding pool can be limited at the avoidance hole, so that a part of the protective member can also be fused to compensate for solidification and contraction of metal in the welding pool, thereby reducing defects such as collapse and a crack of the first welding mark, and improving the quality of the welding.

In some embodiments, the width of the avoidance hole ranges from 0.4 mm to 1 mm.

In some embodiments, the protective member includes: a protective sheet, where the protective sheet is disposed on the second side and attached to the conductive portion; and a convex portion, where the convex portion is convexly disposed on a side that is of the protective sheet and that faces the second side, and the convex portion stops and abuts against the terminal post. The protective sheet is attached to the conductive portion, so that a problem that the first welding mark collapses is reduced.

In some embodiments, the convex portion extends along a circumferential direction of the protective sheet. In the foregoing technical solution, the convex portion extends along the circumferential direction of the protective sheet, so that the convex portion can be stably supported on the terminal post, thereby improving mounting reliability and stability of the protective member, and further facilitating improving production efficiency.

In some embodiments, there is a gap in at least a part between the second side and one end that is of the convex portion and that is away from the protective sheet, to communicate space on two sides of the protective sheet. Alternatively, a through port is provided on the convex portion, to communicate space on two sides of the protective sheet in a thickness direction. Therefore, infiltration efficiency of an electrolyte solution is improved.

In some embodiments, a surface that is of the terminal post and that is on a side away from the active-material coating portion is an external end surface of the terminal post. An accommodating groove is provided on the surface that is of the terminal post and that is on the side away from the active-material coating portion. A notch of the accommodating groove is formed on the external end surface of the terminal post. The accommodating groove communicates with the interior of the housing through the penetration hole. The conductive portion penetrates through the penetration hole, and at least a part of the conductive portion is accommodated in the accommodating groove. In the foregoing technical solution, on the one hand, the accommodating groove is provided on the terminal post, so that a weight of the terminal post can be reduced to some extent, to improve weight energy densities of the battery cell and the battery. On the other hand, because the notch of the accommodating groove is formed on the external end surface of the terminal post, and the external end surface of the terminal post is the surface that is of the terminal post and that is on the side away from the active-material coating portion, the accommodating groove may open in a direction away from the active-material coating portion. In this way, when at least a part of the conductive portion is accommodated in the accommodating groove, the conductive portion can be easily received and organized through the notch of the accommodating groove, and an electrical connection operation and the like between the conductive portion and the terminal post can be easily implemented through the notch of the accommodating groove, thereby reducing difficulty in producing the battery cell, and improving the production efficiency of the battery cell.

In some embodiments, the accommodating groove has a first side groove wall and a second side groove wall that are oppositely arranged in a width direction of the accommodating groove. The penetration hole is provided on a bottom groove wall of the accommodating groove. The conductive portion includes a first extended portion. The first extended portion extends out from the penetration hole, and is attached to a position that is on the bottom groove wall of the accommodating groove and that is close to the first side groove wall. In the foregoing technical solution, the first extended portion of the conductive portion is attached to the position that is on the bottom groove wall of the accommodating groove and that is close to the first side groove wall. Therefore, on one hand, a contact area between the conductive portion and the terminal post can be increased, thereby improving weldability between the conductive portion and the terminal post. On the other hand, metal flowing out of the welding pool can be reduced, and metal in the welding pool can be more filled, thereby facilitating improving stability of electrical connection between the conductive portion and the terminal post.

In some embodiments, the protective member is accommodated in the accommodating groove and covers the first extended portion. On one hand, the accommodating groove can limit a position of the protective member, and improve the mounting reliability and stability of the protective member, so that the protective member can well implement a protection function, a position limiting function, and a dustproof function, the connection stability between the conductive portion and the terminal post is improved, and the reliability of the battery cell is further improved. On the other hand, the protective member does not occupy height space of the terminal post, thereby facilitating improving utilization of space inside the terminal post.

In some embodiments, there is one penetration hole. The conductive portion further includes a second extended portion. The second extended portion and the first extended portion extend out from the penetration hole. The second extended portion is attached to a position that is on the bottom groove wall of the accommodating groove and that is close to the second side groove wall. In the foregoing technical solution, the conductive portion is at least divided into the first extended portion and the second extended portion, and the first extended portion and the second extended portion are attached to different positions of the bottom groove wall. Therefore, on one hand, the first extended portion and the second extended portion can be more easily folded over to the second side of the terminal post, to facilitate connecting the first extended portion and the second extended portion to the terminal post, and even facilitate connecting the first extended portion and the second extended portion to the protective member, for example, facilitate welding the first extended portion and the second extended portion to the terminal post. In addition, the welding power can be reduced, thereby reducing the heat input, reducing the crack defect, and improving reliability of the welding between the conductive portion and the terminal post. On the other hand, a thickness of the conductive portion on the second side of the terminal post can be reduced, and space occupied by the conductive portion inside the terminal post in the height direction is reduced.

In some embodiments, the protective member is accommodated in the accommodating groove and covers the first extended portion and the second extended portion. The protective member is accommodated in the accommodating groove, and the protective member covers the first extended portion and the second extended portion. On one hand, the accommodating groove can limit a position of the protective member, and improve the mounting reliability and stability of the protective member, so that the protective member can well implement a protection function, a position limiting function, and a dustproof function, the connection stability between the conductive portion and the terminal post is improved, and the reliability of the battery cell is further improved. On the other hand, the protective member does not occupy height space of the terminal post, thereby facilitating improving utilization of space inside the terminal post.

In some embodiments, there are a plurality of penetration holes. The conductive portion includes a plurality of extended portions. The plurality of extended portions respectively extend out from the plurality of penetration holes, and are attached to the bottom groove wall of the accommodating groove. In the foregoing technical solution, the plurality of penetration holes are disposed, and the conductive portion is set to include the plurality of extended portions, so that the plurality of extended portions of the conductive portion can be respectively threaded out through the plurality of penetration holes. Therefore, a thickness of each of the extended portions can be reduced, and each of the extended portions is more easily folded over to the second side of the terminal post, to facilitate connection between the extended portion and the terminal post. In addition, the space occupied by the conductive portion inside the terminal post in the height direction can be reduced.

In some embodiments, the protective member is accommodated in the accommodating groove and covers all the extended portions. On one hand, the accommodating groove can limit a position of the protective member, and improve the mounting reliability and stability of the protective member, so that the protective member can well implement a protection function, a position limiting function, and a dustproof function, the connection stability between the conductive portion and the terminal post is improved, and the reliability of the battery cell is further improved. On the other hand, the protective member does not occupy height space of the terminal post, thereby facilitating improving utilization of space inside the terminal post.

In some embodiments, the housing includes a housing cover and a housing body having an opening. The housing cover covers the opening. At least one terminal post is disposed on the housing cover. Alternatively, at least one terminal post is disposed on a wall body that is of the housing body and that is arranged opposite to the opening. The at least one terminal post is disposed on the housing cover. Because a size of the housing cover is small, a size of a mold or jig can be reduced, thereby facilitating reducing costs. The at least one terminal post is disposed on the wall body that is of the housing body and that is arranged opposite to the opening. In this manner, the electrode assembly enters the housing body through the opening, and the conductive portion is directly opposite to the terminal post, so that the conductive portion can be easily connected to the terminal post, thereby improving assembly efficiency of the battery cell.

According to a second aspect, the present application provides a battery, including the battery cell in the foregoing embodiment.

In the technical solution of this embodiment of the present application, the foregoing battery cell is used, so that problems such as fire and explosion occurring in the battery can be reduced, thereby facilitating improving performance and reliability of the battery.

According to a third aspect, the present application provides an electric device, including the battery in the foregoing embodiment.

In the technical solution of this embodiment of the present application, the foregoing battery is used, so that problems such as fire and explosion can be reduced, thereby facilitating improving performance and reliability of a vehicle.

According to a fourth aspect, the present application provides a preparation method of a battery cell. The method includes the following steps: providing a housing, an electrode assembly, and a protective member; mounting the electrode assembly into the housing, and threading at least a part of a conductive portion of the electrode assembly out through a penetration hole of a terminal post on the housing; disposing at least a part of the protective member at an end that is of the terminal post and that is away from the interior of the housing, and covering the penetration hole; and connecting the conductive portion to the terminal post.

In this technical solution of this embodiment of the present application, at least a part of the protective member is disposed on the side that is of the conductive portion and that is away from the electrode assembly, and the penetration hole on the terminal post is covered by using the protective member. Therefore, on one hand, a probability that a foreign matter enters the housing of the battery cell through the penetration hole can be reduced, a probability of a short circuit inside a battery is reduced, and problems such as fire and explosion occurring in the battery are reduced, thereby facilitating improving performance and reliability of the battery cell. On the other hand, at least a part of the conductive portion can be protected, and connection stability between the conductive portion and the terminal post is improved when a position limiting function and a dustproof function are achieved, thereby further improving the reliability of the battery cell.

In some embodiments, when the conductive portion is connected to the terminal post, at least one of the conductive portion and the terminal post is connected to the protective member. In the foregoing technical solution, at least one of the conductive portion and the terminal post is connected to the protective member. Therefore, on one hand, the protective member can be fixedly mounted, sway of the protective member is reduced, and mounting stability of the protective member is improved, so that the protective member can well implement a protection function and a dustproof function, thereby further improving the stability of the welding between the conductive portion and the terminal post. On the other hand, the protective member is pressed onto the conductive portion, and replaces the press nozzle in the welding process in the related technology, so that sizes of the terminal post and the conductive portion can be properly reduced, thereby reducing costs.

In some embodiments, before the conductive portion is connected to the terminal post, the method further includes: arranging a plurality of pressing strips on a side that is of the protective member and that is away from the terminal post, to firmly press the protective member, and enable the protective member to firmly press onto the conductive portion. In the foregoing technical solution, the plurality of pressing strips are used to firmly press the protective member, so that the protective member can be attached to the conductive portion. Therefore, a position of the conductive portion is limited by using the protective member, thereby improving connection reliability and stability between the conductive portion and the terminal post.

The foregoing descriptions only refer to an overview of the technical solutions of the present application, and can be implemented according to content of this specification to understand the technical means of the present application more clearly. To make the foregoing and other objectives, features and advantages of the present application more apparent, specific implementations of the present application are listed below.

### BRIEF DESCRIPTION OF THE DRAWINGS

Various other advantages and benefits will become apparent to those of ordinary skill in the art upon reading the following detailed descriptions of the preferred implementations. The accompanying drawings are only for an objective of illustrating the preferred implementations and are not construed as limiting the present application. In addition, in all the accompanying drawings, same parts are indicated by same reference numerals. In the accompanying drawings:
FIG. 1 is a schematic diagram of a structure of a vehicle according to some embodiments of the present application;
FIG. 2 is an exploded view of a structure of a battery according to some embodiments of the present application;
FIG. 3 is a three-dimensional view of a battery cell according to some embodiments of the present application;
FIG. 4 is a schematic diagram of structures of a terminal post, a conductive portion, a protective member, and the like of a battery cell according to some embodiments of the present application;
FIG. 5 is a cross-sectional view of the structure shown in FIG. 4;
FIG. 6 is a schematic diagram of a structure of the protective member and the conductive portion shown in FIG. 4;
FIG. 7 is a cross-sectional view of a terminal post, a conductive portion, a protective member, and the like of a battery cell according to some embodiments of the present application;
FIG. 8 is a cross-sectional view of a terminal post, a conductive portion, a protective member, and the like of a battery cell according to some other embodiments of the present application;
FIG. 9 is a cross-sectional view of a terminal post, a conductive portion, a protective member, and the like of a battery cell according to some still other embodiments of the present application;
FIG. 10 is a schematic diagram of structures of a terminal post, a conductive portion, a protective member, and the like of a battery cell according to some embodiments of the present application;
FIG. 11 is a cross-sectional view of the structure shown in FIG. 10;
FIG. 12 is a cross-sectional view of a terminal post, a conductive portion, a protective member, and the like of a battery cell according to some embodiments of the present application;
FIG. 13 is a cross-sectional view of a terminal post, a conductive portion, a protective member, and the like of a battery cell according to some other embodiments of the present application;
FIG. 14 is a cross-sectional view of a terminal post, a conductive portion, a protective member, and the like of a battery cell according to some still other embodiments of the present application;
FIG. 15 is a cross-sectional view of a terminal post, a conductive portion, a protective member, and the like of a battery cell according to some embodiments of the present application;
FIG. 16 is a cross-sectional view of a terminal post, a conductive portion, a protective member, and the like of a battery cell according to some other embodiments of the present application;
FIG. 17 is a cross-sectional view of a terminal post, a conductive portion, a protective member, and the like of a battery cell according to some still other embodiments of the present application;
FIG. 18 is a cross-sectional view of a terminal post, a conductive portion, a protective member, and the like of a battery cell according to some yet other embodiments of the present application;
FIG. 19 is a cross-sectional view of a terminal post, a conductive portion, a protective member, and the like of a battery cell according to some embodiments of the present application;
FIG. 20 is a cross-sectional view of a terminal post, a conductive portion, a protective member, and the like of a battery cell according to some other embodiments of the present application;
FIG. 21 is a cross-sectional view of a terminal post, a conductive portion, a protective member, and the like of a battery cell according to some still other embodiments of the present application;
FIG. 22 is a cross-sectional view of a terminal post, a conductive portion, a protective member, and the like of a battery cell according to some embodiments of the present application;
FIG. 23 is a cross-sectional view of a terminal post, a conductive portion, a protective member, and the like of a battery cell according to some other embodiments of the present application;
FIG. 24 is a cross-sectional view of a terminal post, a conductive portion, a protective member, and the like of a battery cell according to some still other embodiments of the present application;
FIG. 25 is a schematic diagram of a part of a structure of a battery cell according to some embodiments of the present application; and
FIG. 26 is a flowchart of a preparation method of a battery cell according to some embodiments of the present application.

Reference numerals in the specific implementations are as follows:
electric device 1000, battery 100, controller 200, motor 300,
first direction Z, second direction X, third direction Y, axial direction R of a terminal post,
battery cell 10,
box body 101, first part 1011, second part 1012,
housing 11, housing body 111, opening 1110, housing cover 112,
terminal post 12, accommodating groove 121, first side groove wall 1211, second side groove wall 1212, bottom groove wall 1213, penetration hole 122, external end surface 123 of the terminal post, internal end surface 124 of the terminal post,
cover plate 13; first conductive member 131; recess 1311; second conductive member 132;
electrode assembly 2, active-material coating portion 21, conductive portion 22, extended portion 220, first extended portion 221, second extended portion 222, first welding mark 23, first welded seam 231, second welded seam 232, third welded seam 233, second welding mark 24,
protective member 3, avoidance hole 301, accommodating cavity 302, protective sheet 31, convex portion 32, explosion-proof valve 4, and pressing strip 6.

### DETAILED DESCRIPTION

Embodiments of the technical solutions of the present application will be described in detail below with reference to the accompanying drawings. The following embodiments are only used to illustrate the technical solutions of the present application more clearly, and therefore are only interpreted as examples, rather than used to limit the protection scope of the present application.

Unless otherwise defined, all technical and scientific terms used herein have the same meaning as commonly understood by those skilled in the technical filed to which the present application belongs. The terminology used herein is for the purpose of describing particular embodiments only and is not intended to limit the present application. The terms "including" and "having" and any variations thereof in the description and claims of the present application and the above description of the accompanying drawings are intended to cover non-exclusive inclusions.

In the descriptions according to the embodiments of the present application, the technical terms "first", "second", and the like are only used to distinguish different objects, and should not be understood as indicating or implying relative importance or implying the number, specific order or primary and secondary relationship of indicated technical features. In the descriptions according to the embodiments of the present application, "a plurality of" means two or more, unless otherwise expressly and specifically defined.

Reference in this specification to "an embodiment" means that a specified feature, structure, or characteristic described with reference to the embodiment may be included in at least one embodiment of the present application. Appearances of the phrase in various locations in this specification are not necessarily all referring to a same embodiment, nor are separate or alternative embodiments mutually exclusive of another embodiment. It is explicitly and implicitly understood by a person skilled in the art that embodiments described in this specification may be combined with another embodiment.

In the descriptions of the present application, the term "and/or" is merely an association to describe the associated objects. It can mean that there are three kinds of relationships, such as A and/or B, which means that A exists alone, A and B exist at the same time, and B exists alone. In addition, in this specification, the character "/" usually indicates an "or" relationship between the associated objects.

In the descriptions of the embodiments of the present application, the term "a plurality of" means two or more (including two). Similarly, "a plurality of groups" means two or more groups (including two groups), and "a plurality of pieces" means two or more pieces (including two pieces).

In the descriptions according to the embodiments of the present application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing the present application and simplifying the description, rather than indicating or implying that the involved device or element should have a specific orientation or should be configured or operated in the specific orientation, therefore, they cannot be understood as limiting the present application.

In the description according to the embodiments of the present application, unless otherwise expressly specified and defined, the technical terms "installed", "connected to", "connected with", "fixed", or the like should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. For those of ordinary skill in the art, the specific meanings of the above terms in the present application may be interpreted according to specific situations.

Nowadays, from the perspective of development of the market situation, power batteries are applied increasingly. The power batteries are not only used in energy storage power systems such as water power plant, fire power plant, wind power plant and solar power plant, but also in electric transportations such as electric bicycles, electric motorcycles, electric vehicles, as well as in military equipment, aerospace and other fields. With continuous expansion of application fields of traction batteries, market demands for traction batteries are also expanding.

A battery cell in the related technology includes a terminal post and an electrode assembly. The electrode assembly includes an active-material coating portion and a conductive portion. A penetration hole is provided on the terminal post. When the conductive portion is to be connected to the terminal post, the conductive portion first needs to penetrate through the penetration hole on the terminal post, to be folded over to a side that is of the terminal post and that faces away from the active-material coating portion, and then the conductive portion is connected to the terminal post.

However, through this setting, a foreign matter enters a housing of the battery cell through the penetration hole. As a result, connection quality between the conductive portion and the terminal post is affect. In addition, if the foreign matter is a conductive material, a short circuit inside a battery is easily caused, potential safety hazards such as fire and explosion exist, and consequently, performance and reliability of the battery cell are seriously affected.

To improve the performance and reliability of the battery cell, in an embodiment of the present application, a protective member is disposed on a side that is of the conductive portion and that is away from the electrode assembly, and the penetration hole of the terminal post is covered by using the protective member, so that a probability that the foreign matter enters the battery cell through the penetration hole can be reduced, thereby facilitating improving the performance and reliability of the battery cell.

The battery cell disclosed in this embodiment of the present application may be used in an electric device using a battery as a power supply or various energy storage systems using a battery as an energy storage element. The electric device may be, but is not limited to, a mobile phone, a tablet computer, a notebook computer, an electric toy, an electric tool, an electric scooter, an electric vehicle, a ship, a spacecraft, and the like. The electric toy may include a fixed or mobile electric toy, for example, a game console, an electric vehicle toy, an electric ship toy, and an electric airplane toy. The spacecraft may include an airplane, a rocket, a space shuttle, a spaceship, and the like.

For ease of description, the following embodiments are described by using an example in which an electric device 1000 in an embodiment of the present application is a vehicle.

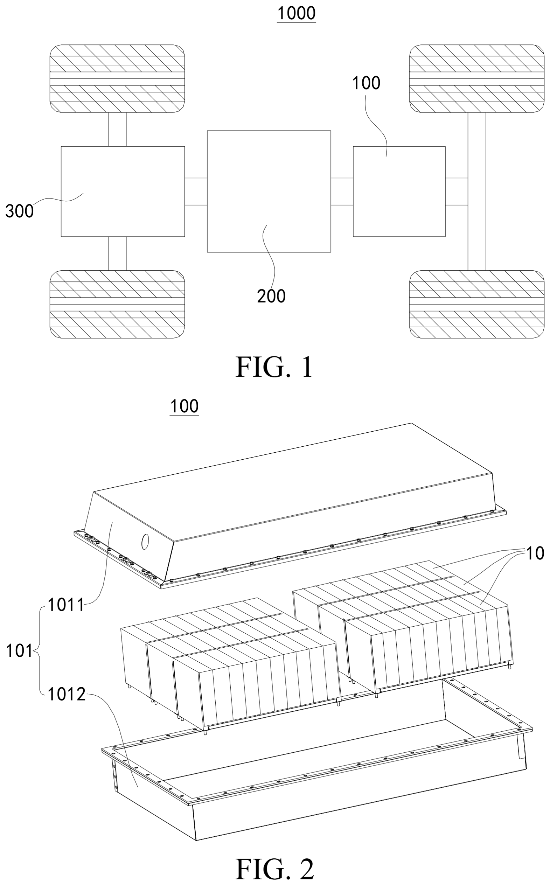

FIG. 1 is a schematic diagram of a structure of a vehicle according to some embodiments of the present application. The vehicle may be a fuel powered vehicle, a gas powered vehicle, or a new energy vehicle. The new energy vehicle may be a pure electric vehicle, a hybrid electric vehicle, an extended-range electric vehicle, or the like. A battery 100 is disposed inside the vehicle, and the battery 100 may be disposed at the bottom, head, or tail of the vehicle. The battery 100 may be configured to supply power to the vehicle. For example, the battery 100 may serve as a power supply for operating the vehicle. The vehicle may further include a controller 200 and a motor 300. The controller 200 is configured to control the battery 100 to supply power to the motor 300, for example, to satisfy working power requirements during starting, navigation, and traveling of the vehicle.

In some embodiments of the present application, the battery 100 can not only serve as the power supply for operating the vehicle, but can also serve as a power supply for driving the vehicle, in place of or partially in place of fuel or natural gas, to provide driving power for the vehicle.

FIG. 2 is an exploded view of a battery 100 according to some embodiments of the present application. The battery 100 includes a box body 101 and battery cells 10, and the battery cells 10 are accommodated in the box body 101. The box body 101 is configured to provide accommodating space for the battery cells 10. The box body 101 may use a variety of structures. In some embodiments, the box body 101 may include a first part 1011 and a second part 1012. The first part 1011 and the second part 1012 cover each other, and the first part 1011 and the second part 1012 jointly define the accommodating space for accommodating the battery cells 10. The second part 1012 may be a hollow structure with one end being open, the first part 1011 may be a plate-like structure, and the first part 1011 covers an open side of the second part 1012, so that the first part 1011 and the second part 1012 jointly define the accommodating space. Alternatively, the first part 1011 and the second part 1012 each may be a hollow structure with one side being open, and an open side of the first part 1011 covers an open side of the second part 1012. Certainly, the box body 101 formed by the first part 1011 and the second part 1012 may be in various shapes, such as a cylinder and a cuboid.

In the battery 100, there may be a plurality of battery cells 10, and the plurality of battery cells 10 may be connected in series, parallel, or series-parallel. Series-parallel connection means that both series connection and parallel connection exist among the plurality of battery cells 10. The plurality of battery cells 10 may be directly connected in series, parallel, or series-parallel together, and then an entirety formed by the plurality of battery cells 10 may be accommodated in the box body 101. Certainly, the battery 100 may alternatively be in a form of a battery 100 module formed by the plurality of battery cells 10 that are first connected in series, parallel, or series-parallel. The plurality of battery 100 modules are then connected in series, parallel, or series-parallel to form an entirety and accommodated in the box body 101. The battery 100 may further include other structures, for example, the battery 100 may further include a bus component configured to implement electrical connection between the plurality of battery cells 10.

Each of the battery cells 10 may be a secondary battery or a primary battery; or may be a lithium-sulfur battery, a sodium-ion battery, or a magnesium-ion battery, but is not limited thereto. The battery cell 10 may be cylindrical, flat, cuboid, or in other shapes.

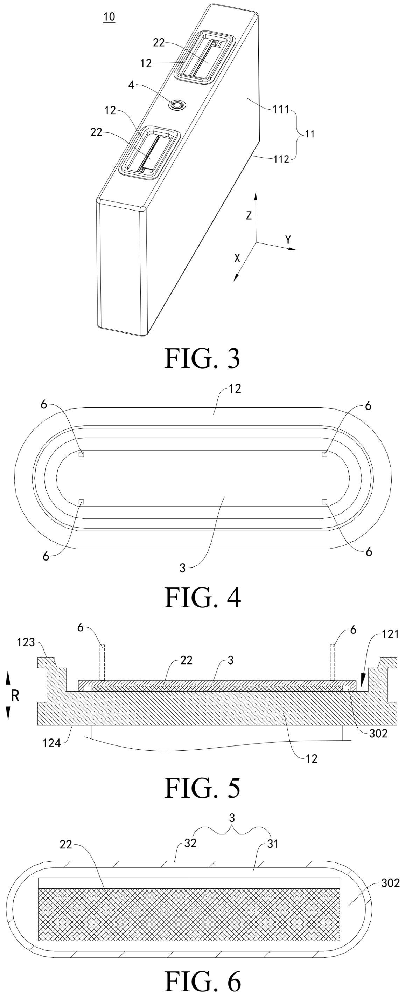

FIG. 3 is a three-dimensional view of a battery cell 10 according to some embodiments of the present application. The battery cell 10 is a smallest unit constituting a battery 100. As shown in FIG. 3, the battery cell 10 includes a housing 11 and an electrode assembly 2, and the housing 11 includes a housing cover 112 and a housing body 111.

The housing cover 112 is a component that covers an opening 1110 of the housing body 111 to isolate an internal environment of the battery cell 10 from an external environment. A shape of the housing cover 112 is not limited, and may be adapted to a shape of the housing body 111 to fit the housing body 111. Optionally, the housing cover 112 may be made of a material with a hardness and strength (for example, aluminum alloy), so that the housing cover 112 is not easily deformed under extrusion and collision, enabling the battery cell 10 to have a higher structural strength and improved reliability. A functional component such as an electrode terminal may be disposed on the housing cover 112. The electrode terminal may be configured to be electrically connected to the electrode assembly 2 to output or input electric energy of the battery cell 10. In some embodiments, a pressure relief mechanism configured to relieve internal pressure when the internal pressure or temperature in the battery cell 10 reaches a threshold may further be disposed on the housing cover 112. The housing cover 112 may alternatively be made of various materials, such as copper, iron, aluminum, stainless steel, aluminum alloy, and plastic, which are not particularly limited in this embodiment of the present application. In some embodiments, an insulator may further be arranged on an inner side of the housing cover 112. The insulator can be configured to isolate electrical connection parts in the housing body 111 from the housing cover 112, to reduce a risk of a short circuit. For example, the insulator may be plastic or rubber.

The housing body 111 is an assembly configured to fit the housing cover 112 to form the internal environment of the battery cell 10, where the formed internal environment may be configured to accommodate the electrode assembly 2, an electrolyte solution, and other components. The housing body 111 and the housing cover 112 may be independent components. The opening 1110 may be provided on the housing body 111, and the housing cover 112 covers the opening 1110 at the opening 1110, to form the internal environment of the battery cell 10. Without limitation, the housing cover 112 and the housing body 111 may alternatively be integrated. Specifically, the housing cover 112 and the housing body 111 may first form a shared connection surface before other components are disposed inside the housing, and then the housing cover 112 covers the housing body 111 when the interior of the housing body 111 needs to be enclosed. The housing body 111 may be of various shapes and sizes, such as a rectangular shape, a cylindrical shape, and a hexagonal prism shape. Specifically, the shape of the housing body 111 may be determined based on a specific shape and size of the electrode assembly 2. The housing body 111 may be made of various materials, such as copper, iron, aluminum, stainless steel, aluminum alloy, and plastic, which are not particularly limited in this embodiment of the present application.

The electrode assembly 2 is a component in the battery cell 10 that undergoes electrochemical reactions. The electrode assembly 2 is disposed in the housing 11. As shown in FIG. 3, a direction Z is a height direction of the electrode assembly 2, a direction X is a width direction of the electrode assembly 2, and a direction Y is a thickness direction of the electrode assembly 2. The housing 11 may include one or more electrode assemblies 2. The electrode assembly 2 is mainly formed by winding or laminating a positive electrode plate and a negative electrode plate, and a separator is generally disposed between the positive electrode plate and the negative electrode plate. Parts of the positive electrode plate and the negative electrode plate with active substances constitute a main body portion of the electrode assembly 2, while parts of the positive electrode plate and the negative electrode plate without the active substances separately constitute a tab. A positive electrode tab and a negative electrode tab may be located at one end of the main body portion together or at two ends of the main body portion separately. During charging and discharging of a battery 100, a positive electrode active substance and a negative electrode active substance react with an electrolyte solution, and the tabs are connected to electrode terminals to form a current loop.

The battery cell 10 further includes an explosion-proof valve 4, and the explosion-proof valve 4 can normally vent and relieve pressure.

According to some embodiments of the present application, referring to FIG. 3, and further referring to FIG. 4 to FIG. 6, FIG. 4 is a schematic diagram of structures of a terminal post 12, a conductive portion 22, a protective member 3, and the like of a battery cell 10 according to some embodiments of the present application, FIG. 5 is a cross-sectional view of the structure shown in FIG. 4, and FIG. 6 is a schematic diagram of a structure of the protective member 3 and the conductive portion 22 shown in FIG. 4. A terminal post 12 is disposed on a housing 11. The terminal post 12 has a first side and a second side that are opposite in a height direction of the terminal post 12. A direction R in FIG. 5 is the height direction of the terminal post 12. The first side of the terminal post 12 faces the interior of the housing 11. The second side of the terminal post 12 is away from the interior of the housing 11.

A penetration hole 122 is provided on the terminal post 12, and the penetration hole 122 penetrates through the first side and the second side. "Penetrating through" herein means that one end of an extension direction of the penetration hole 122 extends to the first side of the terminal post 12, and the other end of the extension direction of the penetration hole 122 extends to the second side of the terminal post 12, so that the penetration hole 122 enable space on the two sides of the terminal post 12 in the height direction to communicate with each other. At least a part of a conductive portion 22 penetrates through the penetration hole 122 from the first side to the second side, so that the conductive portion 22 is inserted on the terminal post 12. The conductive portion 22 may further be folded over to the second side of the terminal post 12, to be attached to the terminal post 12.

The terminal post 12 and the conductive portion 22 may be fixed together through welding, and be electrically connected. Certainly, the terminal post 12 and the conductive portion 22 may alternatively be fixed and electrically connected in a manner such as a conductive adhesive or a conductive screw.

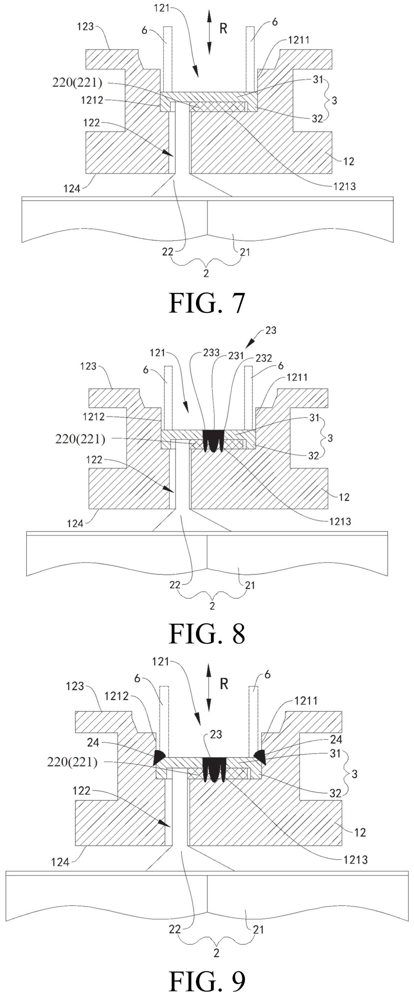

Referring to FIG. 4 to FIG. 6 again, and further referring to FIG. 7, FIG. 7 is a cross-sectional view of a terminal post 12, a conductive portion 22, a protective member 3, and the like of a battery cell 10 according to some embodiments of the present application. The battery cell 10 further includes a protective member 3. At least a part of the protective member 3 is disposed on a side that is of the conductive portion 22 and that is away from the electrode assembly 2, and the protective member 3 covers the penetration hole 122, so that a probability that a foreign matter enters the housing 11 of the battery cell 10 through the penetration hole 122 can be reduced.

In this technical solution of this embodiment of the present application, the protective member 3 is disposed, at least a part of the protective member 3 is disposed on the side that is of the conductive portion 22 and that is away from the electrode assembly 2, and the penetration hole 122 on the terminal post 12 is covered by using the protective member 3. Therefore, on one hand, a probability that a foreign matter enters the housing 11 of the battery cell 10 through the penetration hole 122 can be reduced, a probability of a short circuit inside a battery 100 is reduced, and problems such as fire and explosion occurring in the battery 100 are reduced, thereby facilitating improving performance and reliability of the battery cell 10. On the other hand, at least a part of the conductive portion 22 can be protected, and connection stability between the conductive portion 22 and the terminal post 12 is improved when a position limiting function is achieved, thereby further improving the reliability of the battery cell 10.

FIG. 8 is a cross-sectional view of a terminal post 12, a conductive portion 22, a protective member 3, and the like of a battery cell 10 according to some other embodiments of the present application. The conductive portion 22 is connected to the terminal post 12 through welding to form a first welding mark 23, so that electrical connection between the conductive portion 22 and the terminal post 12 is implemented. The conductive portion 22 and the terminal post 12 may be welded by using laser.

Further, the first welding mark 23 and the penetration hole 122 are arranged in a staggered manner. To be specific, a position at which the conductive portion 22 is welded to the terminal post 12 avoids the penetration hole 122. Because there is a distance between the first welding mark 23 and the penetration hole 122, and the protective member 3 covers the penetration hole 122, on one hand, in a process in which the conductive portion 22 is welded to the terminal post 12, welding slag entering the housing 11 of the battery cell 10 through the penetration hole 122 can be reduced, thereby reducing a risk of a short circuit. On the other hand, a welding area between the conductive portion 22 and the terminal post 12 can be increased, to improve connection stability after the conductive portion 22 is welded to the terminal post 12, thereby facilitating improving the reliability of the battery cell 10.

Referring to FIG. 8 again, the protective member 3 is connected to the conductive portion 22 and the terminal post 12 through welding to form the first welding mark 23, and the first welding mark 23 sequentially extends from the protective member 3 into the conductive portion 22 and the terminal post 12.

In a process in which the conductive portion 22 is welded to the terminal post 12, after the protective member 3 is partially fused, the protective member 3 may fill a welding pool between the conductive portion 22 and the terminal post 12, to compensate for a contraction amount after the welding pool is solidified, thereby reducing a crack defect of the first welding mark 23 and improving quality of the welding between the conductive portion 22 and the terminal post 12. In addition, the protective member 3 is pressed onto the conductive portion 22 to limit a position of the conductive portion 22, and replaces a welding press nozzle in a welding process in the related technology. Therefore, sizes of the terminal post 12 and the conductive portion 22 can be properly reduced to reduce costs, and stability of the welding between the conductive portion 22 and the terminal post 12 can further be improved.

In addition, the protective member 3 is welded to the conductive portion 22 and the terminal post 12, to reduce sway of the protective member 3 and improve mounting stability of the protective member 3, so that the protective member 3 can well implement a protection function, a position limiting function, and a dustproof function, thereby further improving the stability of the welding between the conductive portion 22 and the terminal post 12.

Therefore, in the foregoing technical solution, the protective member 3 is connected to the conductive portion 22 and the terminal post 12 through welding. Therefore, on one hand, quality and stability of the welding between the conductive portion 22 and the terminal post 12 can be improved. On the other hand, the protective member 3 can replace the welding press nozzle in the related technology, and the conductive portion 22 can be firmly pressed onto the terminal post 12 by using the protective member 3, thereby reducing a defect of the welding between the conductive portion 22 and the terminal post 12, and improving connection reliability between the conductive portion 22 and the terminal post 12. Because the welding press nozzle is omitted, costs are reduced.

Referring to FIG. 8 again, the first welding mark 23 includes one welded seam. Alternatively, the first welding mark 23 includes a first welded seam 231, a second welded seam 232, and a third welded seam 233. The second welded seam 232 and the third welded seam 233 are located on two opposite sides of the first welded seam 231 in a width direction of the first welded seam 231. In comparison with a solution in which only the first welded seam 231 is provided, the second welded seam 232 and the third welded seam 233 are added, so that a welding area can be increased, thereby further improving the stability of the welding between the conductive portion 22 and the terminal post 12, and enhancing an overcurrent capability.

In some other embodiments, the protective member 3 is fixedly connected to the conductive portion 22 or the terminal post 12.

Through this setting, on one hand, the protective member 3 can be fixedly mounted, to reduce sway of the protective member 3 and improve mounting stability of the protective member 3, so that the protective member 3 can well implement a protection function and a dustproof function, thereby further improving the stability of the welding between the conductive portion 22 and the terminal post 12. On the other hand, the protective member 3 is pressed onto the conductive portion 22, and replaces the press nozzle in the welding process in the related technology, so that sizes of the terminal post 12 and the conductive portion 22 can be properly reduced, thereby reducing costs.

Referring to FIG. 8 again, and further referring to FIG. 9, FIG. 9 is a cross-sectional view of a terminal post 12, a conductive portion 22, a protective member 3, and the like of a battery cell 10 according to some still other embodiments of the present application. The protective member 3 is connected to the conductive portion 22 or the terminal post 12 through welding to form a second welding mark 24. In other words, the protective member 3 is fixed to the conductive portion 22 or the terminal post 12 through welding.

Specifically, the protective member 3 may be welded to the conductive portion 22 or the terminal post 12 before the conductive portion 22 is welded to the terminal post 12. Alternatively, after the conductive portion 22 is welded to the terminal post 12, the protective member 3 is welded to the conductive portion 22 or the terminal post 12. Certainly, welding between the conductive portion 22 and the terminal post 12 and welding between the protective member 3 and the conductive portion 22 or the terminal post 12 may alternatively be performed simultaneously.

More specifically, in a technical solution in which the protective member 3 is welded to the terminal post 12, the second welding mark 24 may form a strip shape extending along a circumferential direction of the protective member 3, or may be a plurality of welding spots that are discretely disposed. Details are not described herein.

In the foregoing technical solution, the protective member 3 is connected to the conductive portion 22 and the terminal post 12 through welding. Therefore, on one hand, the protective member 3 can be fixedly mounted, so that the protective member 3 can well implement a protection function, a dustproof function, and a position limiting function, thereby further improving the stability of the welding between the conductive portion 22 and the terminal post 12. On the other hand, the overcurrent capability can be enhanced.

Certainly, a manner in which the protective member 3 is connected to the conductive portion 22 or the terminal post 12 is not limited to welding, and may alternatively be a manner such as bonding, interference fit, or using a fastener.

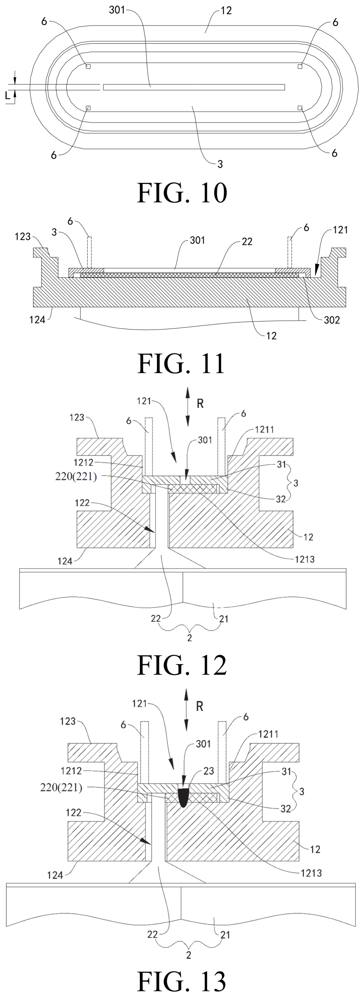

Further referring to FIG. 10 and FIG. 11, FIG. 10 is a schematic diagram of structures of a terminal post 12, a conductive portion 22, a protective member 3, and the like of a battery cell 10 according to some embodiments of the present application, and FIG. 11 is a cross-sectional view of the structure shown in FIG. 10. The protective member 3 has an avoidance hole 301. The avoidance hole 301 and the penetration hole 122 are arranged in a staggered manner. The first welding mark 23 is disposed at the avoidance hole 301. In addition, the first welding mark 23 penetrates through the conductive portion 22 and extends into the terminal post 12.

Specifically, the conductive portion 22 may be connected to the terminal post 12 through laser welding. Certainly, the conductive portion 22 may alternatively be connected to the terminal post 12 in another welding manner.

Using the laser welding as an example, a welding head can extend into the avoidance hole 301 in the process in which the conductive portion 22 is welded to the terminal post 12, to act on a position closer to the conductive portion 22. Therefore, the conductive portion 22 and the terminal post 12 are conveniently welded together. In addition, in the welding process, at least a part of a hole wall of the avoidance hole 301 can also be fused, to fill a welding pool between the conductive portion 22 and the terminal post 12, and compensate for a contraction amount after the welding pool is solidified, so that a crack defect of the first welding mark 23 can be reduced, and the quality and stability of the welding between the conductive portion 22 and the terminal post 12 are improved. Because laser avoids at least a part of a structure of the protective member 3, a laser power can be reduced, thereby reducing the heat input, and further inhibiting formation of a crack.

Therefore, in the foregoing technical solution, the avoidance hole 301 is provided on the protective member 3. Therefore, on one hand, the conductive portion 22 and the terminal post 12 can be conveniently welded together. On the other hand, welding power can be reduced, thereby reducing heat input, further inhibiting formation of a crack, and improving the quality and stability of the welding between the conductive portion 22 and the terminal post 12.

In some embodiments, a width L of the avoidance hole 301 ranges from 0.2 mm to 1.2 mm. For example, the width L of the avoidance hole 301 is 0.2 mm, 0.4 mm, 0.6 mm, 0.8 mm, 1 mm, or 1.2 mm. The width of the avoidance hole 301 is limited within the foregoing range. Therefore, on one hand, the protective member 3 can perform effective avoidance, thereby improving welding efficiency. On the other hand, the welding pool can be limited at the avoidance hole 301, so that a part of the protective member 3 can also be fused to compensate for solidification and contraction of metal in the welding pool, thereby reducing defects such as collapse and a crack of the first welding mark 23, and improving the quality of the welding.

In some optional embodiments, the width L of the avoidance hole 301 ranges from 0.4 mm to 1 mm. For example, the width L of the avoidance hole 301 may be 0.4 mm, 0.7 mm, or 1 mm.

Referring to FIG. 10 and FIG. 11 again, further referring to FIG. 12 and FIG. 13, FIG. 12 is a cross-sectional view of a terminal post 12, a conductive portion 22, a protective member 3, and the like of a battery cell 10 according to some embodiments of the present application, and FIG. 13 is a cross-sectional view of a terminal post 12, a conductive portion 22, a protective member 3, and the like of a battery cell 10 according to some other embodiments of the present application. The avoidance hole 301 is a through avoidance hole. The "through avoidance hole" herein refers to a hole structure in which two ends are open. In the present application, the through avoidance hole penetrates through a side that is of the protective member 3 and that faces away from the conductive portion 22 and a side that is of the protective member 3 and that faces the conductive portion 22.

The first welding mark 23 extends into the through avoidance hole. To be specific, the first welding mark 23 is formed at a position at which the through avoidance hole is originally located, and the first welding mark 23 is connected to a hole wall of the through avoidance hole, so that the protective member 3 is welded to the conductive portion 22 and the terminal post 12.

In the foregoing technical solution, the through avoidance hole is set as the avoidance hole 301, so that a welding head can extend into the avoidance hole 301 in the process in which the conductive portion 22 is welded to the terminal post 12, to more directly act on the conductive portion 22. Therefore, the conductive portion 22 and the terminal post 12 are conveniently welded together. In addition, in the welding process, at least a part of a peripheral wall of the through avoidance hole can also be fused, to fill a welding pool between the conductive portion 22 and the terminal post 12, and compensate for a contraction amount after the welding pool is solidified, so that a crack defect can be reduced, and the quality and stability of the welding between the conductive portion 22 and the terminal post 12 are improved. In addition, the welding power can be reduced, thereby reducing the heat input, and further inhibiting formation of a crack.

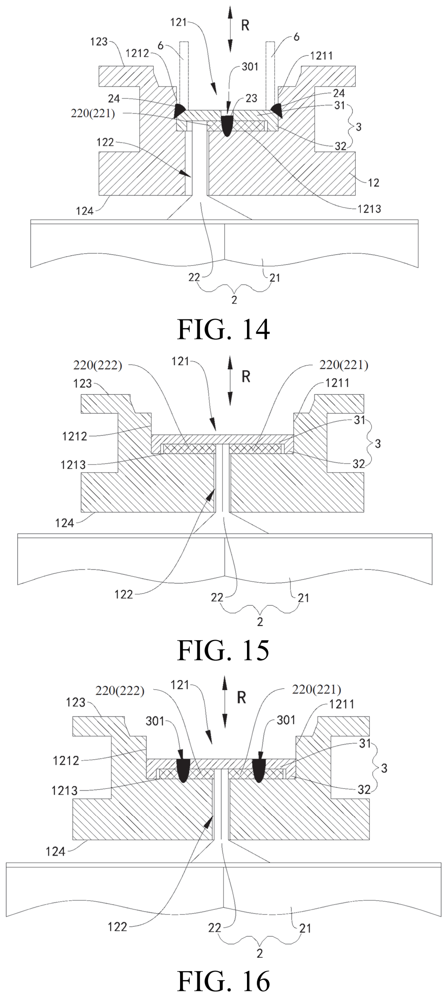

Further referring to FIG. 14, FIG. 14 is a cross-sectional view of a terminal post 12, a conductive portion 22, a protective member 3, and the like of a battery cell 10 according to some still other embodiments of the present application. The protective member 3 has the avoidance hole 301. The avoidance hole 301 and the penetration hole 122 are arranged in the staggered manner. The protective member 3 is connected to the conductive portion 22 and the terminal post 12 through welding at the avoidance hole 301, to form the first welding mark 23. An edge of the protective member 3 is connected to the terminal post 12 through welding to form the second welding mark 24.

In some other embodiments, the avoidance hole 301 is a blind avoidance hole. The "blind avoidance hole" herein refers to a hole structure in which one end is open and the other end is closed. In the present application, the blind avoidance hole may be provided on the side that is of the protective member 3 and that faces away from the conductive portion 22, and an opening 1110 of the blind avoidance hole is located on the side that is of the protective member 3 and that faces away from the conductive portion 22. Certainly, the blind avoidance hole may alternatively be disposed on the side that is of the protective member 3 and that faces the conductive portion 22, and the opening 1110 of the blind avoidance hole is located on the side that is of the protective member 3 and that faces the conductive portion 22.

The first welding mark 23 may be disposed at the blind avoidance hole. To be specific, the first welding mark 23 is formed at a position at which the blind avoidance hole is originally located. The first welding mark 23 sequentially penetrates through a bottom wall of the blind avoidance hole and the conductive portion 22, and extends into the terminal post 12, so that the protective member 3 is welded to the conductive portion 22 and the terminal post 12.

Specifically, in the process in which the conductive portion 22 is welded to the terminal post 12, the welding head may extend into the blind avoidance hole, and directly act on the bottom wall of the blind avoidance hole. After the bottom wall of the blind avoidance hole is fused, the welding pool between the conductive portion 22 and the terminal post 12 can be filled, and the contraction amount after the welding pool is solidified is compensated for, so that the crack defect can be reduced, and the quality and stability of the welding between the conductive portion 22 and the terminal post 12 are improved. In addition, because a thickness of the bottom wall of the blind avoidance hole is small, and the bottom wall is easily fused, the welding power can be reduced, thereby reducing the heat input, and further inhibiting formation of a crack.

Referring to FIG. 6 to FIG. 9 and FIG. 12 to FIG. 14 again, the protective member 3 includes a protective sheet 31 and a convex portion 32. The protective sheet 31 is disposed on the second side of the terminal post 12, and the protective sheet 31 is attached to the conductive portion 22. The convex portion 32 is convexly disposed on a side that is of the protective sheet 31 and that faces the second side of the terminal post 12, and the convex portion 32 stops and abuts against the terminal post 12. The protective sheet 31 is attached to the conductive portion 22, so that a problem that the first welding mark 23 collapses is reduced.

Referring to FIG. 6, the convex portion 32 extends along a circumferential direction of the protective sheet 31, an accommodating cavity 302 is defined between the protective sheet 31, the convex portion 32, and the terminal post 12, and at least a part of the conductive portion 22 penetrates through the penetration hole 122 from the first side to the second side, and is accommodated in the accommodating cavity 302.

The convex portion 32 may form a closed-loop structure extending along the circumferential direction of the protective sheet 31, or may form an open-loop structure extending along the circumferential direction of the protective sheet 31, or may form a plurality of convex ribs. The plurality of convex ribs are arranged at intervals along the circumferential direction of the protective sheet 31, and each of the convex ribs extends along the circumferential direction of the protective sheet 31.

In the foregoing technical solution, the convex portion 32 extends along the circumferential direction of the protective sheet 31, so that the convex portion 32 can be stably supported on the terminal post 12, thereby improving mounting reliability and stability of the protective member 3, and further facilitating improving production efficiency.

To improve infiltration efficiency of an electrolyte solution, after the terminal post 12 is connected to the conductive portion 22, space at which the first side of the terminal post 12 is located and space at which the second side of the terminal post 12 is located are arranged in communication. Because the protective member 3 covers the conductive portion 22, in some embodiments, there is a gap in at least a part between the second side and one end that is of the convex portion 32 and that is away from the protective sheet 31, and the gap communicates space on two sides of the protective sheet 31. Alternatively, in some other embodiments, a through port is provided on the convex portion 32, and the through port communicates space on two sides of the protective sheet 31 in a thickness direction. Therefore, the electrolyte solution can enter the housing 11 through the gap or the through port.

Referring to FIG. 7 to FIG. 9 and FIG. 12 to FIG. 14 again, a surface that is of the terminal post 12 and that is on a side away from the active-material coating portion 21 is an external end surface 123 of the terminal post. An accommodating groove 121 is provided on the surface that is of the terminal post 12 and that is on the side away from the active-material coating portion 21. A notch of the accommodating groove 121 is formed on the external end surface 123 of the terminal post. The accommodating groove 121 communicates with the interior of the housing 11 through the penetration hole 122. The conductive portion 22 penetrates through the penetration hole 122, and at least a part of the conductive portion 22 is accommodated in the accommodating groove 121.

It may be understood that the accommodating groove 121 is a groove body, and the groove body is a groove-shaped structure having a depth. For example, when the terminal post 12 is disposed on an upper end wall of the housing 11, and the external end surface 123 of the terminal post is an upper surface of the terminal post 12, an accommodating groove 121 with a notch opening upward and a groove wall sinking downward is formed as the accommodating groove 121. For another example, when the terminal post 12 is disposed on a lower end wall of the housing 11, and the external end surface 123 of the terminal post is a lower surface of the terminal post 12, an accommodating groove 121 with a notch opening downward and a groove wall sinking upward is formed as the accommodating groove 121.

In the foregoing technical solution, on the one hand, the accommodating groove 121 is provided on the terminal post 12, so that a weight of the terminal post 12 can be reduced to some extent, to improve weight energy densities of the battery cell 10 and the battery 100. On the other hand, because the notch of the accommodating groove 121 is formed on the external end surface 123 of the terminal post, and the external end surface 123 of the terminal post is the surface that is of the terminal post 12 and that is on the side away from the active-material coating portion 21, the accommodating groove 121 may open in a direction away from the active-material coating portion 21. In this way, when at least a part of the conductive portion 22 is accommodated in the accommodating groove 121, the conductive portion 22 can be easily received and organized through the notch of the accommodating groove 121, and an electrical connection operation and the like between the conductive portion 22 and the terminal post 12 can be easily implemented through the notch of the accommodating groove 121, thereby reducing difficulty in producing the battery cell 10, and improving the production efficiency of the battery cell 10.

In addition, because the accommodating groove 121 communicates with the interior of the housing 11 through the penetration hole 122, the accommodating groove 121 may further serve as a buffering and temporary storage structure for the electrolytic solution, so that the housing 11 can accommodate more electrolytic solutions. Because the electrolytic solution is consumed in a charging and discharging process of the battery cell 10, when there are more electrolytic solutions, a service life of the battery cell 10 can be prolonged. In addition, because the accommodating groove 121 can communicate with the interior of the housing 11 through the penetration hole 122, the accommodating groove 121 may further serve as an accommodating and buffering structure for gas generated inside the electrode assembly 2, thereby reducing expansion of the battery cell 10 and improving reliability and stability of the battery cell 10.

Referring to FIG. 7 to FIG. 9 and FIG. 12 to FIG. 14 again, the accommodating groove 121 has a bottom groove wall 1213, a first side groove wall 1211, and a second side groove wall 1212. The first side groove wall 1211 and the second side groove wall 1212 are disposed opposite to each other in a width direction of the accommodating groove 121. The penetration hole 122 is provided on a bottom groove wall 1213 of the accommodating groove 121. The conductive portion 22 includes a first extended portion 221. The first extended portion 221 extends out from the penetration hole 122, and is attached to a position that is on the bottom groove wall 1213 of the accommodating groove 121 and that is close to the first side groove wall 1211.

In the foregoing technical solution, the first extended portion 221 of the conductive portion 22 is attached to the position that is on the bottom groove wall 1213 of the accommodating groove 121 and that is close to the first side groove wall 1211. Therefore, on one hand, a contact area between the conductive portion 22 and the terminal post 12 can be increased, thereby improving weldability between the conductive portion 22 and the terminal post 12. On the other hand, metal flowing out of the welding pool can be reduced, and metal in the welding pool can be more filled, thereby facilitating improving stability of electrical connection between the conductive portion 22 and the terminal post 12.

The protective member 3 is accommodated in the accommodating groove 121 and covers the first extended portion 221. On one hand, the accommodating groove 121 can limit a position of the protective member 3, and improve the mounting reliability and stability of the protective member 3, so that the protective member 3 can well implement a protection function, a position limiting function, and a dustproof function, the connection stability between the conductive portion 22 and the terminal post 12 is improved, and the reliability of the battery cell 10 is further improved. On the other hand, the protective member 3 does not occupy height space of the terminal post 12, thereby facilitating improving utilization of space inside the terminal post 12.

Further referring to FIG. 15, FIG. 15 is a cross-sectional view of a terminal post 12, a conductive portion 22, a protective member 3, and the like of a battery cell 10 according to some embodiments of the present application. There is one penetration hole 122. The conductive portion 22 further includes a second extended portion 222. To be specific, the conductive portion 22 includes the first extended portion 221 and the second extended portion 222. The first extended portion 221 and the second extended portion 222 both extend out from the penetration hole 122. In addition, the first extended portion 221 is attached to the position that is on the bottom groove wall 1213 of the accommodating groove 121 and that is close to the first side groove wall 1211, and the second extended portion 222 is attached to a position that is on the bottom groove wall 1213 of the accommodating groove 121 and that is close to the second side groove wall 1212.

In the foregoing technical solution, the conductive portion 22 is at least divided into the first extended portion 221 and the second extended portion 222, and the first extended portion 221 and the second extended portion 222 are attached to different positions of the bottom groove wall 1213. Therefore, on one hand, the first extended portion 221 and the second extended portion 222 can be more easily folded over to the second side of the terminal post 12, to facilitate connecting the first extended portion 221 and the second extended portion 222 to the terminal post 12, and even facilitate connecting the first extended portion 221 and the second extended portion 222 to the protective member 3, for example, facilitate welding the first extended portion 221 and the second extended portion 222 to the terminal post 12. In addition, the welding power can be reduced, thereby reducing the heat input, reducing the crack defect, and improving reliability of the welding between the conductive portion 22 and the terminal post 12. On the other hand, a thickness of the conductive portion 22 on the second side of the terminal post 12 can be reduced, and space occupied by the conductive portion 22 inside the terminal post 12 in the height direction is reduced.

The protective member 3 is accommodated in the accommodating groove 121 and covers the first extended portion 221 and the second extended portion 222. On one hand, the accommodating groove 121 can limit a position of the protective member 3, and improve the mounting reliability and stability of the protective member 3, so that the protective member 3 can well implement a protection function, a position limiting function, and a dustproof function, the connection stability between the conductive portion 22 and the terminal post 12 is improved, and the reliability of the battery cell 10 is further improved. On the other hand, the protective member 3 does not occupy height space of the terminal post 12, thereby facilitating improving utilization of space inside the terminal post 12.

Further referring to FIG. 16, FIG. 16 is a cross-sectional view of a terminal post 12, a conductive portion 22, a protective member 3, and the like of a battery cell 10 according to some other embodiments of the present application. There is one penetration hole 122. The conductive portion 22 includes the first extended portion 221 and the second extended portion 222.

Specifically, the second extended portion 222 and the first extended portion 221 both extend from the same penetration hole 122, and the first extended portion 221 is attached to the position that is on the bottom groove wall 1213 of the accommodating groove 121 and that is close to the first side groove wall 1211. The first extended portion 221 is welded to the protective member 3 and the terminal post 12 to form one first welding mark 23, and the first welding mark 23 penetrates through the protective member 3 and the conductive portion 22 and extends into the terminal post 12. The second extended portion 222 is attached to the position that is on the bottom groove wall 1213 of the accommodating groove 121 and that is close to the second side groove wall 1212. The second extended portion 222 is welded to the protective member 3 and the terminal post 12 to form another first welding mark 23, and the first welding mark 23 penetrates through the protective member 3 and the conductive portion 22 and extends into the terminal post 12.

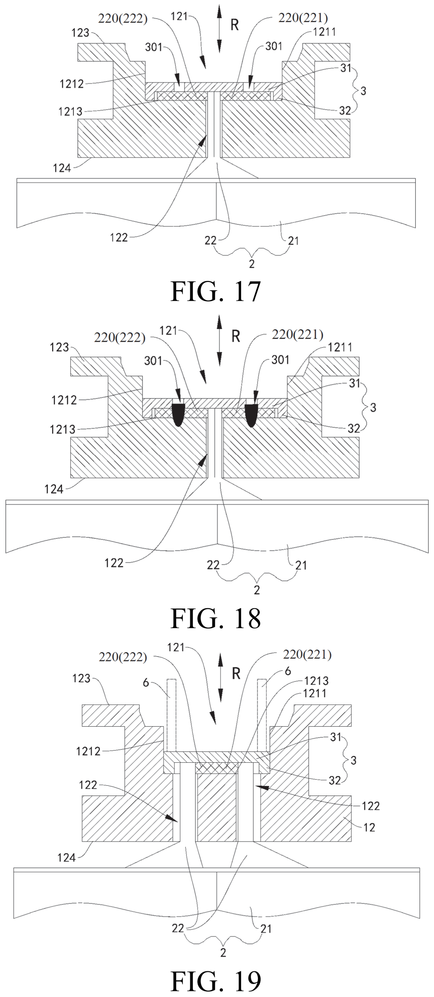

Further referring to FIG. 17 and FIG. 18, FIG. 17 is a cross-sectional view of a terminal post 12, a conductive portion 22, a protective member 3, and the like of a battery cell 10 according to some still other embodiments of the present application, and FIG. 18 is a cross-sectional view of a terminal post 12, a conductive portion 22, a protective member 3, and the like of a battery cell 10 according to some yet other embodiments of the present application. The protective member 3 has two avoidance holes 301. There is one penetration hole 122. The conductive portion 22 includes the first extended portion 221 and the second extended portion 222.

Specifically, the second extended portion 222 and the first extended portion 221 both extend from the same penetration hole 122, and the first extended portion 221 is attached to the position that is on the bottom groove wall 1213 of the accommodating groove 121 and that is close to the first side groove wall 1211. The first extended portion 221 is welded to the protective member 3 and the terminal post 12 to form one first welding mark 23 at one of the avoidance holes 301. The second extended portion 222 is attached to the position that is on the bottom groove wall 1213 of the accommodating groove 121 and that is close to the second side groove wall 1212. The second extended portion 222 is welded to the protective member 3 and the terminal post 12 to form another first welding mark 23 at the other avoidance hole 301.

In some embodiments, there are a plurality of penetration holes 122. The conductive portion 22 includes a plurality of extended portions 220. The plurality of extended portions 220 respectively extend out from the plurality of penetration holes 122, and are attached to the bottom groove wall 1213 of the accommodating groove 121.

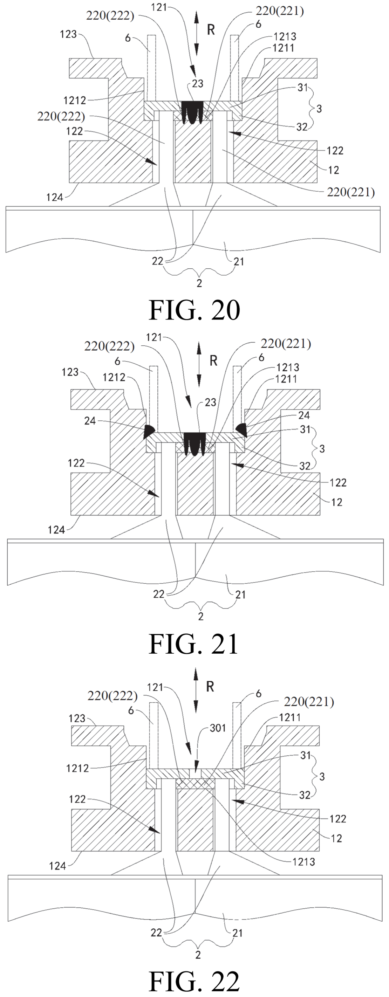

Descriptions are provided below by using an example in which there are two penetration holes 122 and two extended portions 220 of the conductive portion 22. Further referring to FIG. 19 and FIG. 20, FIG. 19 is a cross-sectional view of a terminal post 12, a conductive portion 22, a protective member 3, and the like of a battery cell 10 according to some embodiments of the present application, and FIG. 20 is a cross-sectional view of a terminal post 12, a conductive portion 22, a protective member 3, and the like of a battery cell 10 according to some other embodiments of the present application. The terminal post 12 has two penetration holes 122. The conductive portion 22 includes the first extended portion 221 and the second extended portion 222.

The first extended portion 221 and the second extended portion 222 respectively extend from the two penetration holes 122. The first extended portion 221 and the second extended portion 222 that penetrate out of the two penetration holes 122 may extend toward each other. The first extended portion 221 and the second extended portion 222 may be oppositely arranged and do not overlap, or may at least partially overlap. The first extended portion 221 and the second extended portion 222 are both welded to the protective member 3 and the terminal post 12 to form one first welding mark 23. Certainly, the first extended portion 221 and the second extended portion 222 that penetrate out of the two penetration holes 122 may alternatively extend away from each other. The first extended portion 221 and the second extended portion 222 are both welded to the protective member 3 and the terminal post 12 to form two first welding marks 23.

Further referring to FIG. 21, FIG. 21 is a cross-sectional view of a terminal post 12, a conductive portion 22, a protective member 3, and the like of a battery cell 10 according to some still other embodiments of the present application. The protective member 3, the conductive portion 22, the first extended portion 221, the second extended portion 222, and the terminal post 12 are connected through welding to form the first welding mark 23, and the edge of the protective member 3 is connected to the terminal post 12 through welding to form the second welding mark 24.

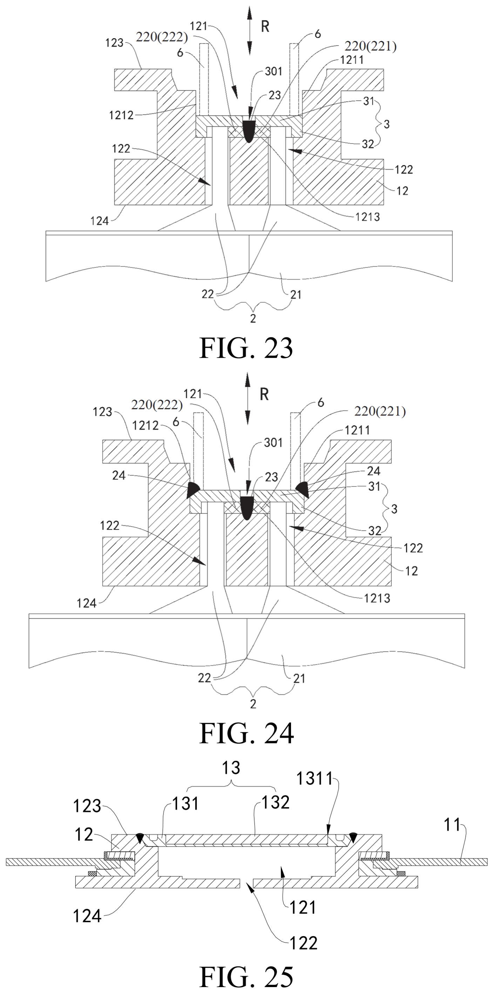

Further referring to FIG. 22 and FIG. 23, FIG. 22 is a cross-sectional view of a terminal post 12, a conductive portion 22, a protective member 3, and the like of a battery cell 10 according to some embodiments of the present application, and FIG. 23 is a cross-sectional view of a terminal post 12, a conductive portion 22, a protective member 3, and the like of a battery cell 10 according to some other embodiments of the present application. An avoidance hole 301 is provided in the middle of the protective member 3.

Specifically, the first extended portion 221 and the second extended portion 222 respectively extend from the two penetration holes 122. The first extended portion 221 and the second extended portion 222 that penetrate out of the two penetration holes 122 may extend toward each other. The first extended portion 221 and the second extended portion 222 may at least partially overlap. The first extended portion 221 and the second extended portion 222 are both welded to the protective member 3 and the terminal post 12 to form one first welding mark 23 at the original avoidance hole 301.

Further referring to FIG. 24, FIG. 24 is a cross-sectional view of a terminal post 12, a conductive portion 22, a protective member 3, and the like of a battery cell 10 according to some still other embodiments of the present application. The protective member 3, the conductive portion 22, the first extended portion 221, the second extended portion 222, and the terminal post 12 are connected through welding to form the first welding mark 23 at the original avoidance hole 301, and the edge of the protective member 3 is connected to the terminal post 12 through welding to form the second welding mark 24.

It should be noted that, in an embodiment in which the first extended portion 221 and the second extended portion 222 are oppositely arranged and do not overlap, one or two avoidance holes 301 may be provided in the middle of the protective member 3, and the first welding mark 23 is formed at the original avoidance hole 301, to connect the protective member 3, the first extended portion 221 and/or the second extended portion 222 of the conductive portion 22, and the terminal post 12 together.

In the foregoing technical solution, the plurality of penetration holes 122 are disposed, and the conductive portion 22 is set to include the plurality of extended portions 220, so that the plurality of extended portions 220 of the conductive portion 22 can be respectively threaded out through the plurality of penetration holes 122. Therefore, a thickness of each of the extended portions 220 can be reduced, and each of the extended portions 220 is more easily folded over to the second side of the terminal post 12, to facilitate connection between the extended portion 220 and the terminal post 12. In addition, the space occupied by the conductive portion 22 inside the terminal post 12 in the height direction can be reduced.

The protective member 3 is accommodated in the accommodating groove 121 and covers all the extended portions 220. On one hand, the accommodating groove 121 can limit a position of the protective member 3, and improve the mounting reliability and stability of the protective member 3, so that the protective member 3 can well implement a protection function, a position limiting function, and a dustproof function, the connection stability between the conductive portion 22 and the terminal post 12 is improved, and the reliability of the battery cell 10 is further improved. On the other hand, the protective member 3 does not occupy height space of the terminal post 12, thereby facilitating improving utilization of space inside the terminal post 12.

Further referring to FIG. 25, FIG. 25 is a schematic diagram of a part of a structure of a battery cell 10 according to some embodiments of the present application. In this embodiment of the present application, the battery cell 10 further includes a cover plate 13. The cover plate 13 fits the terminal post 12 and closes the notch of the accommodating groove 121, and the cover plate 13 is electrically connected to the terminal post 12.

In the foregoing technical solution, the cover plate 13 is disposed to close the notch of the accommodating groove 121, so that a probability that the electrolyte solution in the housing 11 leaks from the notch of the accommodating groove 121 can be reduced. In addition, because the cover plate 13 closes the notch of the accommodating groove 121 and is electrically connected to the terminal post 12, indirect electrical connection between the terminal post 12 and a bus component can be easily implemented by using the cover plate 13, which is beneficial to increasing a connection area of the electrical connection, and further beneficial to reducing a resistance of the electrical connection.

It should be noted that a manner in which the cover plate 13 fits the terminal post 12 and a position at which the cover plate 13 fits the terminal post 12 are not limited, provided that the cover plate 13 can close the notch of the accommodating groove 121. For example, in some embodiments, the cover plate 13 may be welded to the terminal post 12. During processing, the conductive portion 22 may be first threaded through the penetration hole 122 and welded to the groove wall of the accommodating groove 121, and then the cover plate 13 is welded to the terminal post 12, to close the notch of the accommodating groove 121.

It should be further noted that specific compositions of the cover plate 13 is not limited. For example, in some optional embodiments, referring to FIG. 25, the cover plate 13 includes a first conductive member 131 and a second conductive member 132 that are of different materials. The first conductive member 131 fits and is electrically connected to the terminal post 12, and the second conductive member 132 fits and is electrically connected to the first conductive member 131.

In the foregoing technical solution, the cover plate 13 is set to be in a composite form, and a material of the first conductive member 131 is set to be the same as that of the terminal post 12, to facilitate the electrical connection between the first conductive member 131 and the terminal post 12. For example, reliable and stable connection between the first conductive member 131 and the terminal post 12 can be easily implemented through welding. In addition, because a material of the second conductive member 132 is different from that of the first conductive member 131, it is convenient to use the second conductive member 132 to be electrically connected to a bus component whose material is different from that of the terminal post 12. For example, reliable and stable connection between the second conductive member 132 and a bus component whose material is the same as that of the second conductive member 132 can be easily implemented through welding.

For example, when the terminal post 12 is a negative electrode terminal post 12, the terminal post 12 is a copper post. When a bus component is an aluminum sheet, the first conductive member 131 may be set to be a copper material, and the second conductive member 132 may be set to be an aluminum material. In this case, the terminal post 12 and the first conductive member 131 have the same material and may be effectively welded, and the second conductive member 132 and the bus component have the same material and may be effectively welded, so that indirect electric connection between the terminal post 12 and the bus component can be effectively implemented by using the cover plate 13. In addition, the welding between the terminal post 12 and the first conductive member 131 is welding between copper materials, so that flowability is good, and a crack is not easily generated, thereby facilitating improving a sealing effect of a welding position.

Referring to FIG. 25 again, in some optional examples, the first conductive member 131 is located between the accommodating groove 121 and the second conductive member 132. In the foregoing technical solution, because the first conductive member 131 is located between the accommodating groove 121 and the second conductive member 132, the accommodating groove 121 and the second conductive member 132 may be separated. Therefore, when the electrolyte solution in the housing 11 enters the accommodating groove 121 through the penetration hole 122, the first conductive member 131 may be used to prevent the electrolyte solution from contacting the second conductive member 132, thereby resolving a problem that the electrolyte solution corrodes the second conductive member 132.

It should be noted that a manner in which the first conductive member 131 fits the second conductive member 132 is not limited. For example, in some embodiments, referring to FIG. 25, the first conductive member 131 has a recess 1311, the second conductive member 132 is embedded in the recess 1311, and a notch of the recess 1311 is formed on a surface that is of the first conductive member 131 and that is on a side away from the accommodating groove 121, so that the second conductive member 132 is exposed through the notch of the recess 1311. Alternatively, in another embodiment, a manner in which the first conductive member 131 is connected to the second conductive member 132 may be fastening connection, clamping, or the like.

It should be further noted that "exposed" in that the second conductive member 132 is exposed through the notch of the recess 1311 means that the first conductive member 131 does not shield the second conductive member 132 at the notch of the recess 1311, and the second conductive member 132 does not need to project from the notch of the recess 1311. For example, the second conductive member 132 may be level with the surface that is of the first conductive member 131 and that is on the side away from the accommodating groove 121, or the second conductive member 132 projects from the surface that is of the first conductive member 131 and that is on the side away from the accommodating groove 121.

In the foregoing technical solution, on one hand, the second conductive member 132 is embedded in the first conductive member 131, so that assembly difficulty of the first conductive member 131 and the second conductive member 132 can be reduced, and stability and convenience of fitting between the first conductive member 131 and the second conductive member 132 are improved. In addition, a thickness of the cover plate 13 can be reduced, and space occupied by the cover plate 13 is reduced, thereby improving space utilization of the battery cell 10. On the other hand, because the second conductive member 132 may be exposed, through the notch of the recess 1311, from the surface that is of the first conductive member 131 and that is on the side away from the accommodating groove 121, it is beneficial to implement electrical connection between the second conductive member 132 and a bus component outside the terminal post 12.

In addition, because the notch of the recess 1311 is formed on the surface that is of the first conductive member 131 and that is on the side away from the accommodating groove 121, it indicates that the recess 1311 opens in a direction away from the active-material coating portion 21. Therefore, a part that is of the first conductive member 131 and that is used to define a recess wall of the recess 1311 is located between the accommodating groove 121 and the second conductive member 132, to separate the accommodating groove 121 from the second conductive member 132. Therefore, the electrolyte solution entering the recess 1311 is prevented from contacting the second conductive member 132, to reducing leakage of the electrolyte solution.

Certainly, in another embodiment, alternatively, the cover plate 13 may not be in the composite form including a plurality of materials. For example, in another embodiment of the present application, an entirety of the cover plate 13 may alternatively be set to be in a non-composite form obtained by processing a same material, for example, to be adapted to a positive electrode terminal post 12. Details are not described herein.

Referring to FIG. 25 again, the cover plate 13 is further embedded at the notch of the accommodating groove 121. In the foregoing technical solution, the cover plate 13 is embedded in the accommodating groove 121, so that assembly difficulty of the cover plate 13 and the terminal post 12 can be reduced, assembly stability of the cover plate 13 and the terminal post 12 and connection reliability and convenience can be improved, and space occupied by the cover plate 13 outside the terminal post 12 can be reduced. In addition, because the cover plate 13 is embedded at the notch of the accommodating groove 121, there can be sufficient space in the accommodating groove 121 to accommodate the conductive portion 22.

Certainly, in another embodiment of the present application, a manner in which the cover plate 13 fits the terminal post 12 is not limited to that the cover plate 13 is embedded in the accommodating groove 121. Alternatively, the cover plate 13 may directly cover outside the terminal post 12, that is, directly cover the notch of the accommodating groove 121, provided that fitting with a bus component of the battery 100 is convenient. This is not limited in this embodiment.

In some embodiments, at least one terminal post 12 is disposed on the housing cover 112. For example, all terminal posts 12 may be disposed on the housing cover 112. For example, one of terminal posts 12 may be disposed on the housing cover 112, and the remaining terminal posts 12 may be disposed on the housing body 111. Because a size of the housing cover 112 is small, a size of a mold or jig can be reduced, thereby facilitating reducing costs.

In some other embodiments, at least one terminal post 12 is disposed on a wall body that is of the housing body 111 and that is arranged opposite to the opening 1110. In this manner, the electrode assembly 2 enters the housing body 111 through the opening 1110, and the conductive portion 22 is directly opposite to the terminal post 12, so that the conductive portion 22 can be easily connected to the terminal post 12, thereby improving assembly efficiency of the battery cell 10.

Referring to FIG. 2 again, according to some embodiments of the present application, the present application further provides a battery 100, including the battery cell 10 according to any one of the foregoing solutions.

In the technical solution of this embodiment of the present application, the foregoing battery cell 10 is used, so that problems such as fire and explosion occurring in the battery 100 can be reduced, thereby facilitating improving performance and reliability of the battery 100.

Referring to FIG. 1 again, according to some embodiments of the present application, the present application further provides an electric device 1000, including the battery 100 in the foregoing solution, and the battery 100 is configured to supply electric energy to the electric device 1000.

The electric device 1000 may be any one of the foregoing devices or systems in which the battery 100 is used.

In the technical solution of this embodiment of the present application, the foregoing battery 100 is used, so that problems such as fire and explosion can be reduced, thereby facilitating improving performance and reliability of a vehicle.

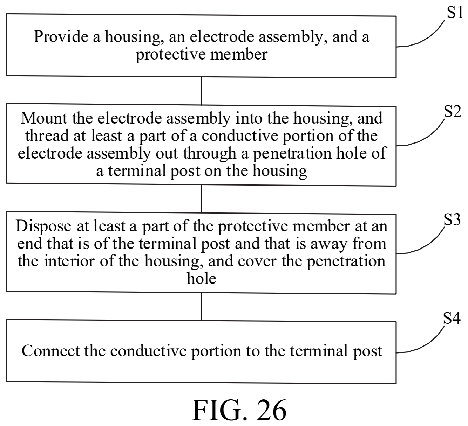

According to some embodiments of the present application, further referring to FIG. 26, FIG. 26 is a flowchart of a preparation method of a battery cell 10 according to some embodiments of the present application. The present application provides a preparation method of a battery cell 10. The method includes the following steps:
providing a housing, an electrode assembly, and a protective member;
mounting the electrode assembly into the housing, and threading at least a part of a conductive portion of the electrode assembly out through a penetration hole of a terminal post on the housing;
disposing at least a part of the protective member at an end that is of the terminal post and that is away from the interior of the housing, and covering the penetration hole; and
connecting the conductive portion to the terminal post.

The terminal post 12 and the conductive portion 22 may be fixed together through welding, and be electrically connected. Certainly, the terminal post 12 and the conductive portion 22 may alternatively be fixed and electrically connected in a manner such as a conductive adhesive or a conductive screw.

In this technical solution of this embodiment of the present application, at least a part of the protective member 3 is disposed on the side that is of the conductive portion 22 and that is away from the electrode assembly 2, and the penetration hole 122 on the terminal post 12 is covered by using the protective member 3. Therefore, on one hand, a probability that a foreign matter enters the housing 11 of the battery cell 10 through the penetration hole 122 can be reduced, a probability of a short circuit inside a battery 100 is reduced, and problems such as fire and explosion occurring in the battery 100 are reduced, thereby facilitating improving performance and reliability of the battery cell 10. On the other hand, at least a part of the conductive portion 22 can be protected, and connection stability between the conductive portion 22 and the terminal post 12 is improved when a position limiting function and a dustproof function are achieved, thereby further improving the reliability of the battery cell 10.

In some embodiments, when the conductive portion 22 is connected to the terminal post 12, at least one of the conductive portion 22 and the terminal post 12 is connected to the protective member 3. For example, the protective member 3 is connected to the conductive portion 22 and the terminal post 12 through welding to form the first welding mark 23, and the first welding mark 23 sequentially extends from the protective member 3 into the conductive portion 22 and the terminal post 12. For another example, the conductive portion 22 is connected to the terminal post 12 through welding to form the first welding mark 23, and an edge of the protective member 3 is connected to the terminal post 12 through welding to form the second welding mark 24.

Certainly, a manner in which the protective member 3 is connected to the conductive portion 22 or the terminal post 12 is not limited to welding, and may alternatively be a manner such as bonding, interference fit, or using a fastener.

In the foregoing technical solution, at least one of the conductive portion 22 and the terminal post 12 is connected to the protective member 3. Therefore, on one hand, the protective member 3 can be fixedly mounted, sway of the protective member 3 is reduced, and mounting stability of the protective member 3 is improved, so that the protective member 3 can well implement a protection function and a dustproof function, thereby further improving the stability of the welding between the conductive portion 22 and the terminal post 12. On the other hand, the protective member 3 is pressed onto the conductive portion 22, and replaces the press nozzle in the welding process in the related technology, so that sizes of the terminal post 12 and the conductive portion 22 can be properly reduced, thereby reducing costs.

Further referring to FIG. 7 to FIG. 9 and FIG. 12 to FIG. 14, before the conductive portion 22 is connected to the terminal post 12, the steps of the preparation method of the battery cell 10 further include: arranging a plurality of pressing strips 6 on a side that is of the protective member 3 and that is away from the terminal post 12, for example, arranging at least four pressing strips 6 at a position that is of the protective member 3 and that is close to an edge, to firmly press the protective member 3, and enable the protective member 3 to firmly press onto the conductive portion 22.

Specifically, in an embodiment in which the conductive portion 22 is connected to the terminal post 12 through welding, a welding press nozzle in the related technology is replaced with the plurality of pressing strips 6, and a position of the pressing strips 6 needs to avoid the welding mark of the conductive portion 22 and the terminal post 12. Therefore, an impact of accumulation of welding slag can be reduced, and costs of the welding press nozzle are saved. In addition, because space in the terminal post 12 is sufficient, an inner width of the terminal post 12 and a length of the conductive portion 22 can also be correspondingly reduced, thereby further reducing costs.

Therefore, in the foregoing technical solution, the plurality of pressing strips 6 are used to firmly press the protective member 3, so that the protective member 3 can be attached to the conductive portion 22. Therefore, a position of the conductive portion 22 is limited by using the protective member 3, thereby improving connection reliability and stability between the conductive portion 22 and the terminal post 12.

In conclusion, it should be noted that the foregoing embodiments are for description of the technical solutions of the present application only rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. Especially, as long as there is no structural conflict, the various technical features mentioned in each embodiment can be combined in any way. The present application is not limited to the particular embodiments disclosed herein, but includes all technical solutions that fall within the scope of the claims.

## Claims

1. A battery cell, comprising:
a housing on which a terminal post is disposed, wherein the terminal post has a first side and a second side that are opposite in a height direction of the terminal post, the first side faces the interior of the housing, and a penetration hole penetrating through the first side and the second side is provided on the terminal post;
an electrode assembly, disposed inside the housing, and comprising an active-material coating portion and a conductive portion connected to the active-material coating portion, wherein at least a part of the conductive portion penetrates from the first side to the second side through the penetration hole; and
a protective member, wherein at least a part of the protective member is disposed on a side that is of the conductive portion and that is away from the electrode assembly, and covers the penetration hole.

2. The battery cell according to claim 1, wherein the conductive portion is connected to the terminal post through welding to form a first welding mark, and the first welding mark and the penetration hole are arranged in a staggered manner.

3. The battery cell according to claim 2, wherein the protective member is connected to the conductive portion and the terminal post through welding, and the first welding mark sequentially extends from the protective member into the conductive portion and the terminal post.

4. The battery cell according to claim 2, wherein the first welding mark comprises one welded seam; or the first welding mark comprises a first welded seam, a second welded seam, and a third welded seam, and the second welded seam and the third welded seam are located on two opposite sides of the first welded seam in a width direction of the first welded seam.

5. The battery cell according to any one of claims 1 to 4, wherein the protective member is fixedly connected to the conductive portion or the terminal post.

6. The battery cell according to claim 5, wherein the protective member is connected to the conductive portion or the terminal post through welding to form a second welding mark.

7. The battery cell according to any one of claims 2 to 4, wherein the protective member has an avoidance hole, the avoidance hole and the penetration hole are arranged in a staggered manner, and the first welding mark is disposed at the avoidance hole, penetrates through the conductive portion, and extends into the terminal post.

8. The battery cell according to claim 7, wherein the avoidance hole is a through avoidance hole, and the first welding mark extends into the through avoidance hole and is connected to a hole wall of the through avoidance hole.

9. The battery cell according to claim 7, wherein the avoidance hole is a blind avoidance hole, and the first welding mark is disposed at the blind avoidance hole, sequentially penetrates through a bottom wall of the blind avoidance hole and the conductive portion, and extends into the terminal post.

10. The battery cell according to any one of claims 7 to 9, wherein a width of the avoidance hole ranges from 0.2 mm to 1.2 mm.

11. The battery cell according to claim 10, wherein the width of the avoidance hole ranges from 0.4 mm to 1 mm.

12. The battery cell according to any one of claims 1 to 11, wherein the protective member comprises:
a protective sheet, wherein the protective sheet is disposed on the second side and attached to the conductive portion; and
a convex portion, wherein the convex portion is convexly disposed on a side that is of the protective sheet and that faces the second side, and the convex portion stops and abuts against the terminal post.

13. The battery cell according to claim 12, wherein the convex portion extends along a circumferential direction of the protective sheet.

14. The battery cell according to claim 12 or 13, wherein there is a gap in at least a part between the second side and one end that is of the convex portion and that is away from the protective sheet, to communicate space on two sides of the protective sheet; or a through port is provided on the convex portion, to communicate space on two sides of the protective sheet in a thickness direction.

15. The battery cell according to any one of claims 1 to 14, wherein a surface that is of the terminal post and that is on a side away from the active-material coating portion is an external end surface of the terminal post, an accommodating groove is provided on the surface that is of the terminal post and that is on the side away from the active-material coating portion, and a notch of the accommodating groove is formed on the external end surface of the terminal post, wherein
the accommodating groove communicates with the interior of the housing through the penetration hole, the conductive portion penetrates through the penetration hole, and at least a part of the conductive portion is accommodated in the accommodating groove.

16. The battery cell according to claim 15, wherein the accommodating groove has a first side groove wall and a second side groove wall that are oppositely arranged in a width direction of the accommodating groove, and the penetration hole is provided on a bottom groove wall of the accommodating groove; and
the conductive portion comprises a first extended portion, and the first extended portion extends out from the penetration hole, and is attached to a position that is on the bottom groove wall of the accommodating groove and that is close to the first side groove wall.

17. The battery cell according to claim 16, wherein the protective member is accommodated in the accommodating groove and covers the first extended portion.

18. The battery cell according to claim 16, wherein there is one penetration hole, the conductive portion further comprises a second extended portion, the second extended portion and the first extended portion extend out from the penetration hole, and the second extended portion is attached to a position that is on the bottom groove wall of the accommodating groove and that is close to the second side groove wall.

19. The battery cell according to claim 18, wherein the protective member is accommodated in the accommodating groove and covers the first extended portion and the second extended portion.

20. The battery cell according to claim 15, wherein there are a plurality of penetration holes, the conductive portion comprises a plurality of extended portions, and the plurality of extended portions respectively extend out from the plurality of penetration holes, and are attached to the bottom groove wall of the accommodating groove.

21. The battery cell according to claim 20, wherein the protective member is accommodated in the accommodating groove and covers all the extended portions.

22. The battery cell according to any one of claims 1 to 21, wherein the housing comprises a housing cover and a housing body having an opening, the housing cover covers the opening, and at least one terminal post is disposed on the housing cover; or at least one terminal post is disposed on a wall body that is of the housing body and that is arranged opposite to the opening.

23. A battery, comprising the battery cell according to any one of claims 1 to 22.

24. An electric device, comprising the battery according to claim 23.

25. A preparation method of a battery cell, wherein the method comprises the following steps:
providing a housing, an electrode assembly, and a protective member;
mounting the electrode assembly into the housing, and threading at least a part of a conductive portion of the electrode assembly out through a penetration hole of a terminal post on the housing;
disposing at least a part of the protective member at an end that is of the terminal post and that is away from the interior of the housing, and covering the penetration hole; and
connecting the conductive portion to the terminal post.

26. The preparation method of the battery cell according to claim 25, wherein when the conductive portion is connected to the terminal post, at least one of the conductive portion and the terminal post is connected to the protective member.

27. The preparation method of the battery cell according to claim 25 or 26, wherein before the connecting the conductive portion to the terminal post, the method further comprises:
arranging a plurality of pressing strips on a side that is of the protective member and that is away from the terminal post, to firmly press the protective member, and enable the protective member to firmly press onto the conductive portion.
